Europäisches Patentamt

European Patent Office

Office européen des brevets

(19)

(11) Veröffentlichungsnummer: **0 191 751**
A2

## (12) EUROPÄISCHE PATENTANMELDUNG

(21) Anmeldenummer: 86890005.1

(22) Anmeldetag: 09.01.86

(51) Int. Cl.⁴: **C 05 F 9/02**, A 01 G 25/09

(30) Priorität: 14.01.85 AT 77/85

(43) Veröffentlichungstag der Anmeldung: 20.08.86
Patentblatt 86/34

(84) Benannte Vertragsstaaten: BE CH DE FR GB IT LI LU NL SE

(71) Anmelder: VOEST-ALPINE Aktiengesellschaft,
Friedrichstrasse 4, A-1011 Wien (AT)

(72) Erfinder: Klinar, Gottfried, Alpenstrasse 33,
A-8707 Leoben (AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien (AT)

(54) Vorrichtung zum Bewässern von Rottegut und Verfahren zum Betrieb der Vorrichtung.

(57) Bei einer Vorrichtung zum Bewässern von Rottegut, insbesondere Kompost, sind die Bewässerungsdüsen (19) an einem Ausleger (11) eines entlang der Auflagefläche (1) für das Rottegut (2) verfahrbaren Wagens (8) angeordnet, der knapp über der höchsten Schütthöhe (3) des Rottegutes (2) geführt ist. Die Auflagefläche (1) für das Rottegut (2) ist in Fahrtrichtung des Wagens (8) langgestreckt und der Wagen (8) ist auf einer die Auflagefläche (1) begrenzenden Mauer (4) verfahrbar. Der Wagen (8) kann auch beidseitig auskragende Ausleger (11, 11a) aufweisen, welche über zwei Auflageflächen (1, 1a) geführt sind, die durch Mauern (4, 6) einseitig begrenzt sind, auf welchen der Wagen (8) verfahrbar ist.

**Vorrichtung zum Bewässern von Rottegut und Verfahren zum Betrieb der Vorrichtung**

Die Erfindung bezieht sich auf eine Vorrichtung zum Bewässern von Rottegut, insbesondere zur Erzeugung von Kompost, mit an eine Wasser führende Leitung angeschlossenen Düsen für das Aufbringen des Wassers auf die Oberfläche des auf einer Auflagefläche liegenden Rottegutes. Für das Aufbringen von Wasser auf Kompost ist es bereits bekannt, schwenkbare oder drehbare Düsen einzusetzen, um die gesamte Oberfläche des Rottegutes bestreichen zu können. Nachteilig bei derartigen Konstruktionen ist die Tatsache, daß vielfach nicht reines Wasser aufgebracht wird, sondern vielmehr leicht verschmutzte Flüssigkeiten, insbesondere mit Biomasse versetzte Flüssigkeiten, aufgesprüht werden sollen. Auf Grund der Verschmutzung des aufzusprühenden Wassers kommt es häufig auch zu einer Verschmutzung der Lagerung der rotierenden Teile und damit zu einem erhöhten Verschleiß dieser Teile. Um die gesamte Oberfläche des Rottegutes bestreichen zu können, müssen solche Düsen eine gewisse Wurfweite ermöglichen. Die Düsen sind zu diesem Zweck verhältnismäßig fein und neigen daher beim Aufbringen derartiger verschmutzter Flüssigkeiten zu einem raschen Verstopfen. Die nachfolgende Reinigung erfordert in der Folge ein Zerlegen der rotierenden Teile und damit aufwendige Wartungsarbeiten.

Aus der US-PS 3 747 620 ist eine Beregnungseinrichtung bekannt geworden, bei welcher mit umfangreicher Regelelektronik eine gleichmäßige Verteilung von Flüssigkeit über eine größere Fläche sichergestellt werden soll. Diese bekannte Einrichtung erfordert einen hohen apparativen und regeltechnischen Aufwand. Im Zusammenhang mit der Behandlung von Rottegut ist es aus den DE-OSen 26 07 209 und 29 33 656 und der AT-PS 319 287 bekannt geworden, Luft von unten in ein Rottebecken einzupressen, wobei gegebenenfalls eine Berieselung vorgesehen sein kann. Die Berieselung erfolgt bei der

0191751

- 2 -

Ausbildung nach der DE-OS 26 07 209 über schwenkbare Düsenträger. Bei dieser Ausbildung ist jedoch die einmal gewählte Drehlage der Düsenträger vorgegeben und eine periodische und gleichmäßige Verteilung des Sprühwassers über die gesamte Breite des Rottebeckens nicht gewährleistet. Infolge der erforderlichen Wurfweite sind auch die aus den Düsen austretenden Strahlen gegen Windeinwirkung sehr empfindlich. Bei entsprechender Windrichtung kommt es daher vor, daß gewisse Teile der Oberfläche der Rotte nicht bewässert werden und andere Teile wieder übermäßig bewässert werden. Gemäß der AT-PS 319 287 und der DE-OS 26 07 209 ist daher die Auflagefläche für die Rotte innerhalb einer Halle bzw. einer Traglufthalle angeordnet. Eine solche Anordnung ist aufwendig, und zwar insbesondere dann, wenn es sich um große Auflageflächen bzw. um große Rottemengen handelt.

Die Erfindung zielt nun darauf ab, eine einfache und betriebssichere Bewässerungsvorrichtung der eingangs genannten Art zu schaffen, mit der es möglich ist, verschmutzte Flüssigkeiten in grobem, rasch in das Rottegut einsickerndem Strahl aufzubringen und bei der eine Störung durch Windeinwirkung nicht zu befürchten ist. Zur Lösung dieser Aufgabe ist die erfindungsgemäße Vorrichtung im wesentlichen dadurch gekennzeichnet, daß wenigstens ein entlang der Auflagefläche auf einer Bahn verfahrbarer Wagen vorgesehen ist, der mit wenigstens einem quer zur Bahn auskragenden, über die Auflagefläche ragenden, die Wasser führende Leitung und die Düsen tragenden Ausleger ausgestattet ist, daß der Ausleger knapp über der höchsten Schütthöhe der Rotte geführt ist und daß die Düsen von Wasseraustrittsöffnungen mit großem Querschnitt gebildet und nach unten, gegebenenfalls in spitzem Winkel zur Achse der Wasser führenden Leitung und/oder zur Symmetrieebene des Auslegers, gerichtet sind. Durch den Ausleger können die Düsen nahe an die zu bewässernden Oberflächenteile der Rotte herangeführt werden und es ist eine Vertragung der aus den Düsen austretenden Strahlen durch Windeinwirkung nicht zu befürchten. Es ist damit eine gleichmäßige Bewässerung der Oberfläche der Rotte ermöglicht. Durch große Wasseraustrittsöffnungen, welche dadurch ermöglicht sind, daß eben die Düsen oberhalb der zu entwässernden Flächenteile angeordnet sind und eine Wurfweite nicht erforderlich ist, kann das Wasser in starkem Strahl austreten und es ist eine Verlegung der Austrittsöffnungen nicht zu befürchten. Die erforderliche Wassermenge wird durch die Zeit der Wasseraufbringung geregelt, da eben der Wagen langsamer oder schneller fahren kann. Wenn das Wasser in dünnen Strahlen aus den Düsen austritt und eine große Wurfweite gegeben ist, so besteht bei Frost die Gefahr einer Eisbildung. Es wird dann die Rotte nicht bewässert, sondern es bildet sich ein Eisregen. Dadurch, daß der Ausleger knapp über der Oberfläche der Rotte geführt ist und daß das Wasser in starken Strahlen austritt, ist die Bewässerung nicht frostempfindlich.

Gemäß der Erfindung ist vorzugsweise die Längenerstreckung der insbesondere von einer Rotteplatte gebildeten Auflagefläche in Richtung der Bahn größer als die Quererstreckung derselben. Die Fahrbahn für den Wagen kann beliebig lang ausgebildet werden und es wird damit die Bewässerung einer großen Rotteoberfläche ermöglicht, ohne daß der Ausleger übermäßig lang bemessen werden muß.

Gemäß der Erfindung ist zweckmäßig die insbesondere von Schienen gebildete Bahn auf wenigstens einer die Auflagefläche begrenzenden Mauer angeordnet. Die Schienen liegen somit oberhalb der Auflagefläche der Rotte und können damit nicht durch die Rotte verlegt werden. Hiebei ist gemäß einer bevorzugten Ausführungsform der Erfindung die Auflagefläche nur einseitig durch eine Mauer begrenzt, wobei der Ausleger über die zumindest nahezu gesamte Breite der Auflagefläche reicht. Durch die Mauer wird die Auflagefläche der Rotte begrenzt, so daß die Schütthöhe der Rotte unmittelbar neben der Bahn für den Wagen ihr höchstes Ausmaß erreichen kann, weil ja kein Schüttwinkel zu berücksichtigen ist. Dies ermöglicht eine optimale Ausnützung der Länge des Auslegers. Es kann dann die Schütthöhe der Rotte über den nahezu gesamten Bereich des Auslegers gleich hoch bemessen werden, so daß eine gleichmäßige Bewässerung der Rotte in ihrer gesamten Tiefe gewährleistet ist. Die Anordnung der Mauer nur an einer Seite der Auflagefläche, und zwar an derjenigen Seite, an welcher die Bahn für den Wagen verläuft, bringt den Vorteil mit sich, daß von der anderen Seite aus Radlader zufahren können, durch welche die Rotte umgeschaufelt werden kann, was auch wieder die gleichmäßige Bewässerung begünstigt. Hiebei ist die Auflagefläche zweckmäßig von einer in Richtung der Bahn langgestreckten Rotteplatte gebildet, wodurch eine gute Unterlage für das Befahren durch den Radlader gegeben ist. Die erfindungsgemäße Ausbildung ist daher im besonderen Maße für die Bewässerung großer Rottemengen bei großen Bemessungen der Auflagefläche geeignet.

Das Gewicht des Auslegers kann durch ein Gegengewicht ausgeglichen sein. Gemäß einer bevorzugten Ausführungsform der Erfindung weist jedoch der Wagen nach entgegengesetzten Richtungen auskragende Ausleger auf, wobei zu beiden Seiten der Bahn Auflageflächen angeordnet sind. Damit wirkt der eine Ausleger als Gegengewicht für den anderen Ausleger. In allen Fällen ist gemäß der Erfindung zweckmäßig der Wagen auf zwei in einem der Spurbreite des Wagens entsprechenden Abstand parallel verlaufenden Mauern verfahrbar, zwischen welchen die Wasserzuführungsleitung, ein Stromkabel und/oder Steuerleitungen untergebracht sind. Wenn der Wagen mit zwei entgegengesetzt gerichteten Auslegern ausgebildet ist, welche zu beiden Seiten angeordnete Auflageflächen für die Rotte bestreichen, so wirkt die linke Mauer als Begrenzung für die linke Auflagefläche und die rechte Mauer als Begrenzung für die rechte Auflagefläche. Für die Wasserzuführung kann gemäß der Erfindung wenigstens ein Schleppschlauch vorgesehen sein.

Es kann aber auch für die Wasserzuführung eine Saugrinne vorgesehen sein, in welche ein an die Wasser führende Leitung angeschlossenes Saugrohr eintaucht, wodurch ein immerhin aufwendiger Schleppschlauch erspart wird. Eine solche Saugrinne kann gemäß der Erfindung durch einander in der Längsmitte überlappende elastische Platten abgedeckt sein, welche durch das Saugrohr auseinandergedrückt werden. Gemäß der Erfindung können auch entlang der Mauer oder Mauern Abflußöffnungen von der Rotteplatte zum Raum zwischen den parallel verlaufenden Mauern vorgesehen sein, von wo aus das überschüssige Wasser zur Wiederverwendung der Wasser führenden Leitung zuführbar ist. Es kann somit auch das gegebenenfalls überschüssige Wasser, welches durch die Rotte hindurchgedrungen ist, wieder für die Bewässerung ausgenützt werden. Gemäß der Erfindung ist zweckmäßig am Wagen ein Fahrmotor und eine Pumpe mit Pumpenmotor angeordnet. Die Motoren werden über das Stromkabel versorgt und über die Steuerleitungen gesteuert. Der Wagen ist somit selbstfahrend. Bei Anordnung einer Saugrinne, in welche ein Saugrohr eintaucht, ist die Anordnung der Pumpe am Wagen unbedingt erforderlich. Bei Anordnung eines Schleppschlauches für die Wasserzuführung ist die Anordnung der Pumpe am Wagen vorteilhaft.

Gemäß einer bevorzugten Ausführungsform der Erfindung sind entlang der Bahn Positionsmelder für den Wagen angeordnet, wobei der Wagen jeweils in Abschnitten zwischen den Positionsmeldern verfahrbar ist. Eine solche Ausbildung bietet beträchtliche Vorteile. Gemäß einem erfindungsgemäßen Verfahren zum Betrieb der Vorrichtung wird zweckmäßig die Rotte zumindest in einem durch die Positionsmelder bestimmten Abschnitt bewässert, während in anderen, nicht bewässerten Abschnitten die Rotte umgeschaufelt wird. Es wird auf diese Weise ein laufender Betrieb ermöglicht, was insbesondere bei großen Anlagen von besonderem Vorteil ist. Durch die Zeit, während welcher der Wagen mit dem Ausleger über einen Abschnitt verfahren wird, kann das Ausmaß der Bewässerung eingestellt werden und es können wechselweise Abschnitte bewässert und in anderen Abschnitten die Rotte, beispielsweise durch einen Radlader, umgeschaufelt werden. Die Steuerung kann hiebei in einfacher Weise durch ein Steuergerät erfolgen, welches in Abhängigkeit von den Positionsmeldern bestimmt, in welchem Abschnitt und in welchen Abschnitten der Wagen verfahren wird und mit welcher Geschwindigkeit das Verfahren des Wagens erfolgt, um das richtige Ausmaß der Bewässerung in solchen Abschnitten zu bestimmen.

Gemäß der Erfindung ist zweckmäßig am Wagen ein Turm angeordnet, mit welchem der Ausleger oder die Ausleger verspannt sind. Es bereiten daher auch lange Ausleger keine Schwierigkeiten. Es ist die richtige Höhenlage des Auslegers über seine gesamte Länge knapp über der Oberfläche der Rotte gesichert und es kann der Ausleger verhältnismäßig leicht ausgebildet werden. Zweckmäßig ist hiebei der Ausleger von einem Leichtmetallprofil gebildet, welches die von einem Kunststoffrohr gebildete Wasser führende Leitung trägt. Hiebei ist gemäß der Erfindung vorzugsweise der Ausleger mit dem Wagen zumindest in horizontaler Richtung unverschwenkbar verbunden.

In der Zeichnung ist die Erfindung anhand von Ausführungsbeispielen schematisch erläutert.

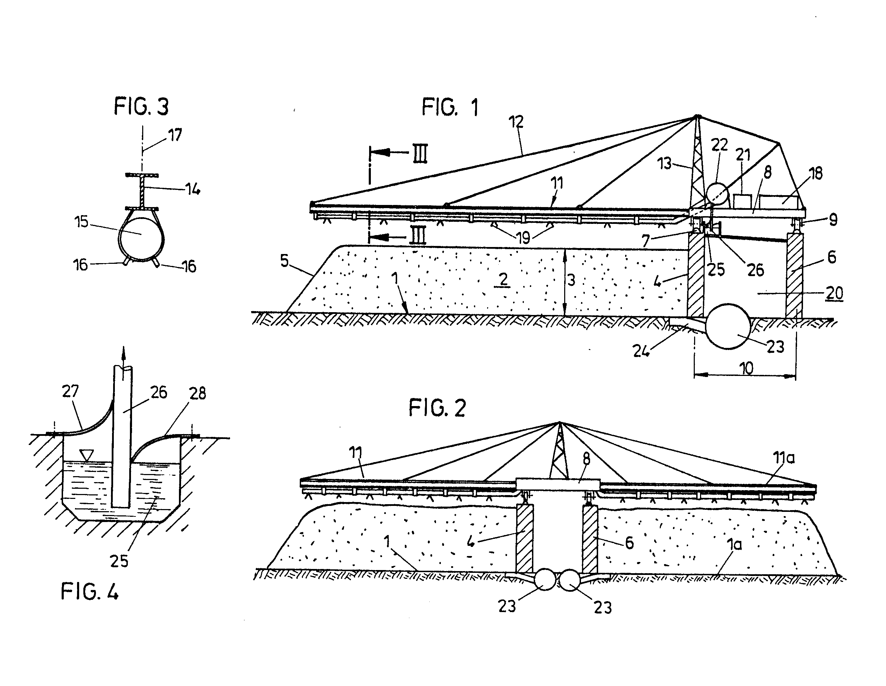

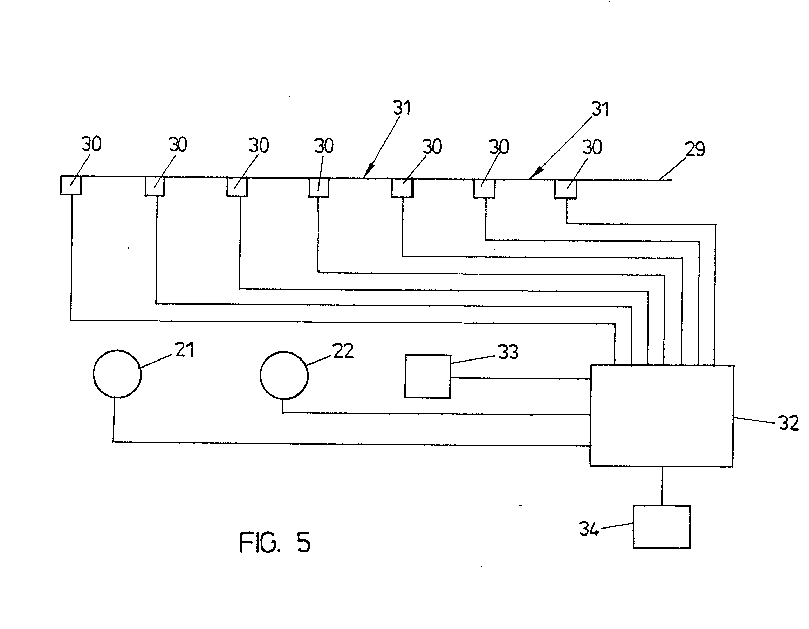

Fig.1 zeigt eine Anlage mit einseitigem Ausleger. Fig.2 zeigt eine Anlage mit zwei entgegengesetzt gerichteten Auslegern. Fig.3 zeigt einen Schnitt nach Linie III-III durch den Ausleger. Fig.4 zeigt einen Querschnitt durch eine Saugrinne. Fig.5 zeigt ein Schaltschema.

1 ist die Auflagefläche für die Rotte, welche beispielsweise von einer betonierten Rotteplatte gebildet sein kann. Auf dieser Auflagefläche 1 liegt die Rotte 2, wobei in der Zeichnung die höchste Schütthöhe mit 3 angedeutet ist. Wie

Fig.1 zeigt, ist die Auflagefläche 1 auf der rechten Seite durch eine Mauer 4 begrenzt, so daß die Rotte in der gleichen Schichthöhe 3 bis zu der Mauer 4 liegen kann. Auf der anderen Seite schließt die Rotteschicht mit einem Schüttwinkel 5 ab. Es ist hier keine Mauer vorgesehen, so daß von dieser Seite ein Radlader zugefahren werden kann, mit welchem die Rotte umgeschaufelt werden kann. Parallel zu der Mauer 4 ist eine zweite Mauer 6 angeordnet. Auf diesen Mauern 4 und 6 sind Schienen 7 verlegt, auf welchen ein Wagen 8 mit Rädern 9 verfahrbar ist. Der Mittelabstand 10 zwischen diesen Mauern 4 und 6 entspricht der Spurbreite der Räder 9 des Wagens 8.

Der Wagen 8 trägt einen Ausleger 11, welcher durch Seile 12 mit einem am Wagen 8 angeordneten Turm 13 verspannt ist. Der Ausleger kann daher verhältnismäßig schwach ausgebildet sein und besteht, wie Fig.3 zeigt, aus einem Leichtmetallprofilträger 14, an welchen ein Kunststoffrohr 15 angehängt ist. Dieses Kunststoffrohr weist Düsen 16 auf, welche einen verhältnismäßig großen Querschnitt aufweisen, so daß das Wasser in starken Strahlen austreten kann. Diese Düsen sind abwärts gerichtet und können beispielsweise in spitzem Winkel zur Achse des Kunststoffrohres 15, wie dies Fig.1 zeigt, und auch in spitzem Winkel zur Symmetrieebene 17 liegen. Der Ausleger ist knapp oberhalb der höchsten Schütthöhe 3 der Rotte 2 geführt und dadurch, daß die Düsen 16 abwärts gerichtet sind, könnten sie einen verhältnismäßig großen Austrittsquerschnitt aufweisen, so daß das Wasser in starken Strahlen 19 auf die Rotte fließt und auch bei tiefen Temperaturen eine Eisbildung vermieden ist.

Bei der Anordnung nach Fig.1 ist das Gewicht des Auslegers 11 durch ein Gegengewicht 18 ausgeglichen. Bei einer Anordnung nach Fig.2 sind zwei entgegengesetzt gerichtete Ausleger 11 und 11a vorgesehen, wobei an der anderen Seite der Mauer 6 eine zweite langgestreckte Auflagefläche 1a angeordnet ist. Gemäß Fig.2 ist somit die Anordnung verdoppelt. Da die Gewichte der beiden Ausleger 11 und 11a sich ausgleichen, ist ein Gegengewicht nicht erforderlich.

Der Raum 20 zwischen den beiden Mauern 4 und 6 ist für die Wasserzuführung, für ein Stromkabel und für die Steuerleitung ausgenützt, wobei Stromkabel und Steuerleitung als Schleppkabel ausgebildet sind. Auf dem Wagen 8 ist ein Fahrmotor 21 und eine Pumpe 22 mit Antriebsmotor angeordnet. Im Raum 20 können nun Wasserhauptzuführungsrohre 23 angeordnet werden, an welche der Schleppschlauch angeschlossen ist. Wie Fig.1 zeigt, ist ein Verbindungskanal 24 von der Auflagefläche 1 zum Wasserhauptzuführungsrohr 23 vorgesehen, so daß überflüssiges Wasser wieder zur Bewässerung verwendet werden kann.

Fig.4 zeigt die Anordnung einer Saugrinne 25 gleichfalls im Raum 20 zwischen den Mauern 4 und 6. In dieser Saugrinne taucht ein an die Pumpe 22 angeschlossenes Saugrohr 26 ein. Die Saugrinne 25 ist durch elastische Platten 27 und 28 abgedeckt, welche in der Längsmitte der Saugrinne 25 einander überlappen. Diese elastischen Platten 27 und 28 werden durch die Saugrinne auseinandergedrückt und schließen sich beim Verfahren des Wagens wieder.

Fig.5 zeigt schematisch ein Schaltschema. Entlang der Bahn 29, entlang welcher der Wagen 8 verfahren wird, sind Positionsmelder 30 für die Stellung des Wagens angeordnet. Diese Positionsmelder 30 können optoelektrisch als Lichtschranken oder elektromagnetisch ausgebildet sein. In den Abschnitten 31 zwischen diesen Positionsmeldern wird der Wagen verfahren, wobei der Wagen auch über mehrere Abschnitte 31 gleichzeitig verfahren werden kann. Die Positionsmelder 30 melden die Lage des Wagens zu einem Steuergerät 32. Von diesem Steuergerät wird nun der Fahrmotor 21 und der Pumpenmotor 22 gesteuert. 33 ist ein Wassermengenmelder, welcher die jeweils verbrauchte Wassermenge an das Steuergerät 32 meldet. 34 ist ein Zeitvorgabegerät, durch welches beispielsweise der Beginn der Bewässerung voreingestellt wird. Das Steuergerät 32 verwertet diese Meldungen und stellt die Fahrgeschwindigkeit und den Fahrbereich des Wagens in den jeweiligen Abschnitten 31 ein, wobei die aufgebrachte Wassermenge durch die Fahrgeschwindigkeit des Wagens und die Zeitdauer der Bewässerung geregelt werden kann. Das Steuergerät 32 ermöglicht hiebei die Bewässerung der Rotte nach vorgegebenen Programmen und steuert den Wagen 8 so, daß er jeweils in den programmierten Abschnitten verfahren wird.

Patentansprüche:

1. Vorrichtung zum Bewässern von Rottegut, insbesondere zur Erzeugung von Kompost, mit an eine Wasser führende Leitung angeschlossenen Düsen für das Aufbringen des Wassers auf die Oberfläche des auf einer Auflagefläche liegenden Rottegutes, dadurch gekennzeichnet, daß wenigstens ein entlang der Auflagefläche (1, 1a) auf einer Bahn verfahrbarer Wagen (8) vorgesehen ist, der mit wenigstens einem quer zur Bahn auskragenden, über die Auflagefläche (1, 1a) ragenden, die Wasser führende Leitung (15) und die Düsen (16) tragenden Ausleger (11, 11a) ausgestattet ist, daß der Ausleger (11, 11a) knapp über der höchsten Schütthöhe (3) der Rotte (2) geführt ist und daß die Düsen (16) von Wasseraustrittsöffnungen mit großem Querschnitt gebildet sind und nach unten, gegebenenfalls in spitzem Winkel zur Achse der Wasser führenden Leitung (15) und/oder zur Symmetrieebene (17) des Auslegers (11, 11a) gerichtet sind.

2. Vorrichtung nach Anspruch 1, dadurch gekennzeichnet, daß die Längenerstreckung der insbesondere von einer Rotteplatte gebildeten Auflagefläche (1, 1a) in Richtung der Bahn größer ist als die Quererstreckung derselben.

3. Vorrichtung nach Anspruch 1 oder 2, dadurch gekennzeichnet, daß die insbesondere von Schienen (7) gebildete Bahn auf wenigstens einer die Auflagefläche (1, 1a) begren-zenden Mauer (4, 6) angeordnet ist.

4. Vorrichtung nach Anspruch 1, 2 oder 3, dadurch gekennzeichnet, daß die Auflagefläche (1) nur einseitig durch eine Mauer (4) begrenzt ist und der Ausleger (11) über die zumindest nahezu gesamte Breite der Auflagefläche (1) reicht.

5. Vorrichtung nach einem der Ansprüche 1 bis 4, dadurch gekennzeichnet, daß die Auflagefläche (1) von einer in Richtung der Bahn langgestreckten Rotteplatte gebildet ist.

6. Vorrichtung nach einem der Ansprüche 1 bis 5, dadurch gekennzeichnet, daß der Wagen (8) nach entgegengesetzten Richtungen auskragende Ausleger (11, 11a) aufweist, und zu

beiden Seiten der Bahn Auflageflächen (1, 1a) angeordnet sind.

7. Vorrichtung nach einem der Ansprüche 1 bis 6, dadurch gekennzeichnet, daß der Wagen (8) auf zwei in einem der Spurbreite des Wagens (8) entsprechenden Abstand parallel verlaufenden Mauern (4, 6) verfahrbar ist, zwischen welchen die Wasserzuführungsleitung (23), ein Stromkabel und/oder Steuerleitungen untergebracht sind.

8. Vorrichtung nach Anspruch 7, dadurch gekennzeichnet, daß für die Wasserzuführung (23) wenigstens ein Schleppschlauch vorgesehen ist.

9. Vorrichtung nach Anspruch 7, dadurch gekennzeichnet, daß für die Wasserzuführung eine Saugrinne (25) vorgesehen ist, in welche ein an die Wasser führende Leitung (15) angeschlossenes Saugrohr (26) eintaucht.

10. Vorrichtung nach Anspruch 9, dadurch gekennzeichnet, daß die Saugrinne (25) durch einander in der Längsmitte überlappende elastische Platten (27, 28) abgedeckt ist.

11. Vorrichtung nach einem der Ansprüche 1 bis 10, dadurch gekennzeichnet, daß entlang der Mauer oder Mauern (4, 6) Abflußöffnungen (24) von der Rotteplatte zum Raum (20) zwischen den parallel verlaufenden Mauern (4, 6) vorgesehen sind, von wo aus das überschüssige Wasser zur Wiederverwendung der Wasser führenden Leitung (15) zuführbar ist.

12. Vorrichtung nach einem der Ansprüche 1 bis 11, dadurch gekennzeichnet, daß entlang der Bahn Positionsmelder (30) für den Wagen (8) angeordnet sind und der Wagen (8) jeweils in Abschnitten zwischen den Positionsmeldern (30) verfahrbar ist.

13. Vorrichtung nach einem der Ansprüche 1 bis 12, dadurch gekennzeichnet, daß am Wagen (8) ein Fahrmotor (21) und eine Pumpe (22) mit Pumpenmotor angeordnet ist.

14. Vorrichtung nach einem der Ansprüche 1 bis 13, dadurch gekennzeichnet, daß am Wagen (8) ein Turm (13) angeordnet ist, mit welchem der Ausleger oder die Ausleger (11, 11a) verspannt sind.

15. Vorrichtung nach einem der Ansprüche 1 bis 14, dadurch gekennzeichnet, daß der Ausleger (11, 11a) von einem Leichtmetallprofil (14) gebildet ist, welches die von einem Kunststoffrohr gebildete Wasser führende Leitung (15) trägt.

16. Vorrichtung nach einem der Ansprüche 1 bis 15, dadurch gekennzeichnet, daß der Ausleger (11, 11a) mit dem Wagen (8) zumindest in horizontaler Richtung unverschwenkbar verbunden ist.

17. Verfahren zum Betrieb einer Vorrichtung nach einem der Ansprüche 1 bis 16, dadurch gekennzeichnet, daß die Rotte (2) zumindest in einem durch die Positionsmelder (30) bestimmten Abschnitt bewässert wird, während in anderen, nicht bewässerten Abschnitten die Rotte (2) umgeschaufelt wird.

0191751

FIG. 5